# DEMANDE DE BREVET EUROPEEN

(11) **EP 2 143 906 A1**
(43) Date de publication de la demande: **13.01.2010**
(21) Numéro de dépôt: 09008849.3
(22) Date de dépôt: 07.07.2009
(51) Int. Cl.: F02B 75/24, H02K 7/18

(54) **Transmission de puissance multi vilebrequins**

(30) Priorité: 07.07.2008 FR 0854603
(71) Demandeur: EXOSUN, 33650 Martillac (FR)
(72) Inventeur: Rochier, Dominique M., 33380 Biganos (FR)
(74) Mandataire: Le Forestier, Eric

(57) **Abrégé**

La présente invention relève du mécanisme à vilebrequins (2) d'un moteur, comprenant un premier et un deuxième vilebrequin (2a, 2b ; 3a, 3b) à axes parallèles, dont les premier et deuxième vilebrequins (2a, 2b ; 3a, 3b) sont formés par un premier et un deuxième moteurs/alternateurs électriques comprenant chacun un rotor (21a, 21b ; 31a, 31b) et un stator (22a, 22b ; 32a, 32b).

## Description

L'invention concerne le domaine de la transformation de puissance, et notamment de la transformation d'une puissance thermodynamique en puissance électrique ou vice-versa.

La transformation d'un mouvement de translation en mouvement de rotation s'effectue très souvent par un système bielle-manivelle. C'est le cas dans de nombreux moteurs thermiques, par exemple.

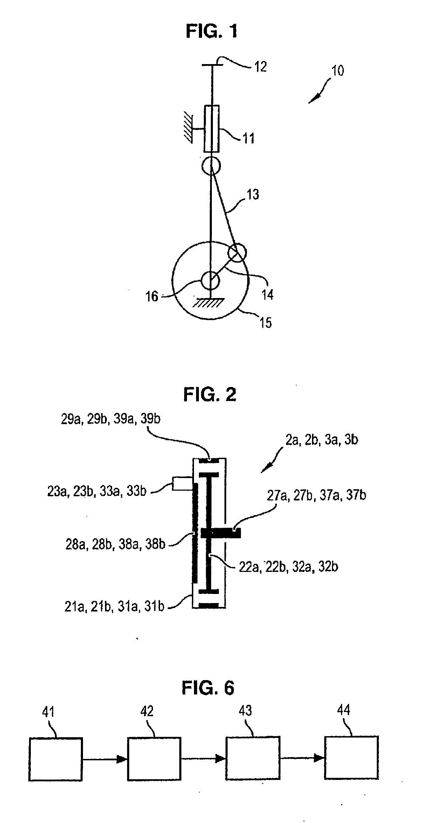

En référence à la figure 1 est décrit un mécanisme à vilebrequins. Ce mécanisme comprend un cylindre 11. Le cylindre 11 comprend à son tour une chemise, le système bielle-manivelle 13, 14, un piston 12 monté à translation sur le système bielle-manivelle 13, 14 le long de la chemise.

Dans la chemise, est définie une chambre de compression ou de déteinte. Dans le cas d'une détente des gaz, cette énergie est récupérée de manière rotative sur un vilebrequin 16 via le système bielle-manivelle 13,14.

Dans le cas d'une compression de gaz, une énergie est transmise via le système bielle-manivelle 13, 14 aux gaz.

Au niveau du contact entre le piston 12 et la chemise, ce mécanisme présente 2 types de frottements :
- un frottement (a) dû à un contact du piston 12 sur une paroi de la chemise qui permet d'assurer une étanchéité;
- et un frottement (b) généré par un effort de la bielle 13 sur le piston 12, Le frottement (b) exercé par le piston 12 sur la paroi de la chemise est un inconvénient des systèmes bielle-manivelle classiques. En effet, l'effort exercé par la bielle 13 sur le piston 12 n'est pas sur le même axe que les efforts des gaz et les efforts inertiels

Quand le piston 12 passe au point mort haut ou au point mort bas, il bascule d'un côté à l'autre, ce qui est bruyant.

Le frottement ainsi que le bruit engendré par le basculement du piston peuvent être supprimés en utilisant deux systèmes bielle-manivelle, s'il y a deux vilebrequins à entraîner, comme dans les documents DE 100 19 959 A1, DE 100 54 427 A1, GB 2 320 058 A notamment. Les deux vilebrequins ainsi que les deux systèmes bielle-manivelle sont disposés de manière symétrique par rapport à l'axe du cylindre.

Ainsi, les composantes perpendiculaires à l'axe du cylindre de l'effort exercé par la première bielle sur le piston sont compensées par les composantes perpendiculaires à l'axe du cylindre de l'effort exercé par la deuxième bielle sur le piston. Le piston, une fois arrivé au point haut, ne bascule plus.

Une difficulté d'un tel mécanisme à double-vilebrequins est la nécessité de synchroniser les deux vilebrequins. Les systèmes connus disposent d'une synchronisation mécanique réalisée par engrenage.

Un tel mécanisme est décrit par les documents cités ci-dessus ; les vilebrequins sont disposés l'un à côté de l'autre, de manière sensiblement parallèle. Chaque vilebrequin présente une roue dentée en engrenage avec la roue dentée de l'autre vilebrequin.

Ces mécanismes à double-vilebrequins sont souvent utilisés pour produire de l'électricité à partir d'une machine thermique. La perte de puissance due au frottement (b) entre le piston et les parois du cylindre est annulée. Cette synchronisation mécanique présente cependant les inconvénients suivants :
- la synchronisation mécanique impose des liaisons supplémentaires entre vilebrequins et s'avère donc coûteuse et la fiabilité diminue ;
- la récupération d'énergie étant réalisée au niveau d'un vilebrequin, l'énergie récupérée par le second vilebrequin est acheminée par une synchronisation mécanique : la synchronisation consomme alors inutilement de l'énergie;
- il y a perte d'énergie au niveau de l'engrenage entre les roues des vilebrequins (qui est également source de bruit), même si cette perte est inférieure à la perte d'énergie par frottement ;
- l'encombrement est accru ; et
- les vilebrequins sont liés à un bâti alors que des alternateurs sont situés en bout de vilebrequin, la liaison au bâti représente alors une perte d'énergie par frottement, et l'entraînement de l'alternateur par le vilebrequin peut également être source de frottement.

Un but de l'invention est donc de proposer un mécanisme à vilebrequins pour lequel la perte d'énergie par frottement est encore plus réduite.

Pour cela, l'invention propose un mécanisme à vilebrequins d'un moteur, comprenant un premier et un deuxième vilebrequins à axes parallèles, **caractérisé en ce que** les premier et deuxième vilebrequins sont formés par un premier et un deuxième moteurs/alternateurs électriques comprenant chacun un rotor et un stator.

Un tel dispositif a pour avantage de supprimer les pertes d'énergie qui auraient été dues à une synchronisation mécanique.

D'autres caractéristiques préférées mais non limitatives du mécanisme à vilebrequins selon l'invention sont :
- le mécanisme à vilebrequins comprend des moyens de synchronisation électroniques et mécaniques entre les premier et deuxième moteurs/alternateurs électriques ;
- les premier et deuxième moteurs/alternateurs électriques sont alignés sur un même axe, leur rotor se faisant face ;
- les premier et deuxième moteurs/alternateurs électriques sont positionnés selon deux axes parallèles distincts et symétriquement par rapport à un plan de symétrie colinéaire aux axes parallèles et distincts ;
- chacun des rotors comprend un maneton lié à une ou deux bielle(s) ;
- chaque maneton est lié à une seule bielle et les deux bielles, formant une paire de bielles, agissent sur un piston ;
- le piston est relié à un autre piston par une tige s'étendant entre eux ;
- chaque maneton est lié à deux bielles, les bielles agissent par paire sur un piston, une paire étant constituée d'une bielle liée au maneton du premier moteur/alternateur électrique et d'une bielle liée au maneton du deuxième moteur/alternateur électrique ;
- les paires de bielles sont disposées de manière axialement symétrique par rapport à une direction sensiblement perpendiculaire à l'axe des moteurs/alternateurs électriques ;
- les paires de bielles sont disposées de manière symétrique par rapport au plan de symétrie ;
- les manetons sont liés à une et même mono bielle agissant sur deux pistons ;
- la mono bielle comprend un guide à manetons avec une ouverture allongée destiné à recevoir et à guider les manetons et de deux montants chacun relié à un piston, les montants étant reliés par soudure ou venant de moulage avec le guide à manetons, les montants d'étendent suivant un axe de symétrie du guide à manetons, l'axe de symétrie étant lui-même perpendiculaire à une direction d'allongement de l'ouverture ;
- chacun des manetons s'étend sur au plus la demi-épaisseur du guide à maneton à l'intérieur de l'ouverture allongée ;
- les pistons sont agencés de sorte à se déplacer en opposition de phase ;
- les moteurs/alternateurs électriques tournent autour de leur axe dans des sens opposés ;
- les moteurs sont choisis parmi : des moteurs thermiques ; des compresseurs, des moteurs à air chaud.

D'autres caractéristiques, buts et avantages sortiront de la description suivante en référence aux dessins sur lesquels :
- la figure 1 est un schéma illustrant un mécanisme à vilebrequins selon l'état de la technique ;
- la figure 2 est un schéma illustrant un moteur/alternateur électrique en lieu et place d'un vilebrequin utilisé dans le mécanisme à vilebrequins selon l'invention ;
- les figures 3a et 3b sont des vues schématiques d'une troisième variante d'un premier mode de réalisation du mécanisme à vilebrequins selon l'invention ;
- les figures 4a et 4b sont des vues schématiques d'une quatrième variante du premier mode de réalisation du mécanisme à vilebrequins selon l'invention ;
- la figure 5 représente de manière schématique la première variante du premier et du deuxième mode de réalisation du mécanisme à vilebrequins selon l'invention ;
- la figure 6 est un schéma illustrant la synchronisation des moteurs/alternateurs électriques selon l'invention ; et
- la figure 7 est une vue schématique d'un ensemble de deux pistons reliés entre eux par une tige.

### Moteur/alternateur électrique

En référence à la figure 2 est ci-après décrit un moteur/alternateur électrique 2a, 2b, 3a, 3b en lieu et place d'un vilebrequin dans le mécanisme à vilebrequins 2, 3 selon l'invention.

Le moteur/alternateur électrique 2a, 2b, 3a, 3b comprend un rotor 21 a, 21b, 31a, 31b et un stator 22a, 22b, 32a, 32b. Le rotor 21a, 21 b, 31a, 31b loge le stator 22a, 22b, 32a, 32b.

Le stator 22a, 22b, 32a, 32b est solidairement lié à un axe de rotation fixe 27a, 27b, 37a, 37b jouant le rôle d'un tourillon et s'étendant hors du rotor 21 a, 21 b, 31 a, 31 b.

Le rotor 21a, 21b, 31a, 31b comprend un maneton sur une face externe opposé à l'axe de rotation fixe 27a, 27b, 37a, 37b. Au rotor 21 a, 21 b, 31 a, 31b est également lié un contrepoids permettant l'équilibrage 28a, 28b, 38a, 38b et situé à l'intérieur du rotor 21a, 21 b, 31a, 31b sur une paroi interne de la face présentant le maneton 23a, 23b, 33a, 33b. La fonction de manivelle d'un vilebrequin classique est réalisée par le rotor 21a, 21b, 31a, 31b liés aux manetons 23a, 23b, 33a, 33b et aux contrepoids 28a, 28b, 38a, 38b, qui tourne autour de l'axe de rotation fixe 27a, 27b, 37a, 37b.

La production d'électricité par le moteur/alternateur électrique 2a, 2b, 3a, 3b est assurée par des aimants 29a, 29b, 39a, 39b rapportés au niveau d'une circonférence radialement interne du rotor 21a, 21b, 31a, 31 b et placés en regard de bobines situées au niveau d'une circonférence radialement externe du stator 22a, 22b, 32a, 32b.

Le mécanisme à vilebrequins 2, 3 selon l'invention comprend un premier moteur/alternateur électrique 2a, 3a et un deuxième moteur/alternateur électrique 2b, 3b.

La synchronisation des moteurs/alternateurs électriques est assurée électroniquement et mécaniquement dans toutes les phases possibles de fonctionnement.

### Premier mode de réalisation

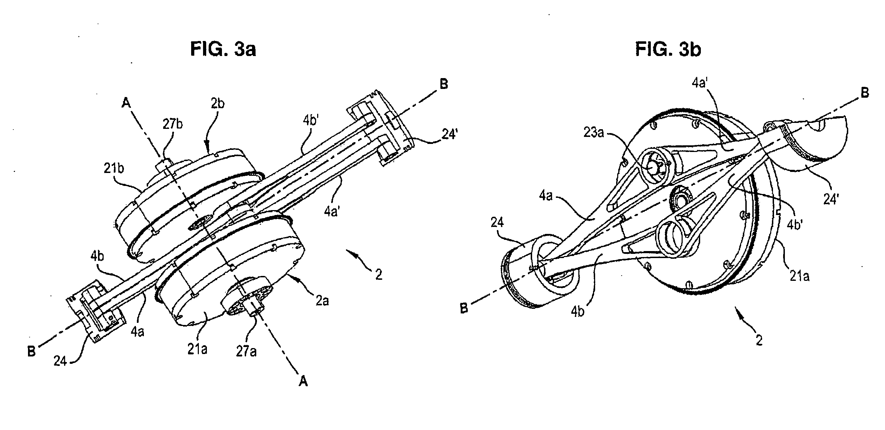

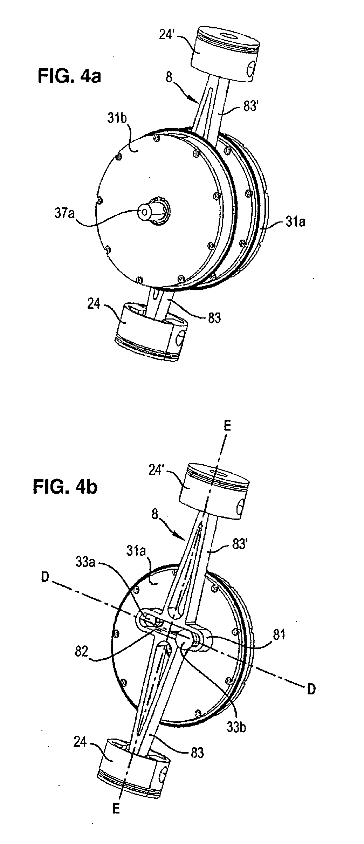

Dans un premier mode de réalisation du mécanisme à vilebrequins 2 selon l'invention illustré sur les figures 3a, 3b, 4a, 4b, 5 et 7, les premier et deuxième moteurs/alternateurs électriques 2a; 2b sont centrés sur un même axe AA qui est également l'axe des tourillons 27a, 27b. Les faces des rotors 21a, 21b portant les manetons 23a, 23b sont orientées l'une vers l'autre.

### Première variante du premier mode de réalisation

Dans une première variante du premier mode de réalisation du mécanisme à vilebrequins 2 selon l'invention, une bielle 6a est liée à rotation, au niveau d'une de ses extrémités, au maneton 23a du premier moteur/alternateur électrique 2a et une bielle 6b est liée à rotation, au niveau d'une de ses extrémités, au maneton 23b du deuxième moteur/alternateur électrique 2b. Les bielles 6a, 6b agissent ensemble sur un piston 24 pouvant se déplacer le long d'une chemise (non représentée sur les figures) suivant un axe BB sensiblement perpendiculaire à l'axe AA des moteurs/alternateurs électriques 2a, 2b.

Les deux bielles 6a, 6b sont orientés de manière sensiblement symétrique par rapport à l'axe BB du piston 24 et dans le même sens. Les bielles 6a, 6b sont liées à rotation, au niveau de l'autre de leur extrémité, au piston 24.

### Deuxième variante du premier mode de réalisation

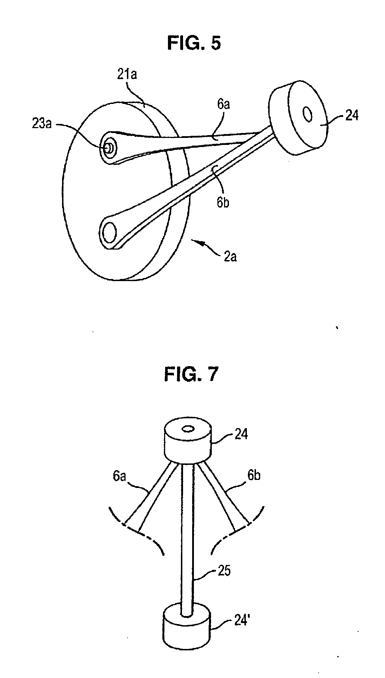

Dans une deuxième variante du premier mode de réalisation du mécanisme à vilebrequins 2 selon l'invention, l'agencement bielles-manetons-moteurs/alternateurs électriques est identique à la première variante du premier mode de réalisation. En lieu et place d'un simple piston est prévu un ensemble de deux pistons reliés l'un à l'autre par une tige (25) s'étendant entre les deux pistons et suivant une direction correspondant au déplacement des pistons dans les chemises correspondantes (voir figure 7). Les bielles n'agissent directement que sur un seul des deux pistons.

### Troisième variante du premier mode de réalisation

Dans une troisième variante du premier mode de réalisation du mécanisme à vilebrequins 2 selon l'invention, deux bielles 4a et 4a' sont liées à rotation au premier maneton 23a et deux bielles 4b et 4b' sont liées à rotation au deuxième maneton 23b, au niveau d'une de leurs extrémités. Les bielles agissent par paire (4a, 4b) et (4a', 4b') sur un premier et deuxième pistons 24 et 24' pouvant se déplacer le long d'une première et d'une deuxième chemises respectives (non représentées sur les figures) suivant un axe BB sensiblement perpendiculaire à l'axe AA des moteurs/alternateurs électriques 2a, 2b. Une paire de bielles est constituée d'une bielle 4a ou 4a' liée au premier maneton 23a et d'une bielle 4b ou 4b' liée au deuxième maneton 23b. Les bielles d'une paire de bielles sont donc orientées sensiblement suivant l'axe BB des pistons 24, 24' et dans le même sens, et sont disposées de manière axialement symétrique par rapport à l'axe BB des pistons 24, 24'. Les bielles 4a, 4b, 4a', 4b' sont liées à rotation aux pistons 24, 24' au niveau de l'autre de leurs extrémités.

Les pistons 24, 24' sont orientés dans des sens opposés de l'axe BB, ce qui signifie également que les paires de bielles sont orientées dans des sens opposés de l'axe BB.

### Quatrième variante du premier mode de réalisation

Dans une quatrième variante du premier mode de réalisation du mécanisme à vilebrequins 2 selon l'invention, une mono bielle 8 est utilisée. Cette mono bielle comprend un guide à manetons 81 avec une ouverture 82 allongée suivant une direction DD destinée à recevoir et à guider les manetons 23a, 23b, et deux montants 83, 83'. Ces montants 83, 83' sont liés par soudure ou venant de moulage avec le guide à manetons 81 et s'étendent suivant un axe de symétrie EE du guide à manetons 81 sensiblement perpendiculaire à la direction d'allongement DD de l'ouverture.

Chacun des montants 83, 83' est lié à un piston 24, 24' respectivement, ces pistons se déplacent le long de chemises (non représentées) suivant l'axe EE.

La somme des longueurs des extensions des manetons 23a, 23b, à l'intérieur de l'ouverture allongée 82 ne doit pas dépasser l'épaisseur du guide à maneton 81.

De préférence, les manetons 23a, 23b s'étend sur au plus la demi-épaisseur du guide à manetons 81 à l'intérieur de l'ouverture allongée 82.

### Deuxième mode de réalisation

Dans un deuxième mode de réalisation, les deux moteurs/alternateurs électriques 3a, 3b sont positionnés de manière à ce que leurs axes de rotations 37a, 37b sont parallèles. Deux symétries sont alors possibles.

Dans la première symétrie, les deux moteurs/alternateurs électriques 3a, 3b sont symétriques par rapport à un plan de symétrie P. L'intersection de ce plan de symétrie P avec un plan moyen des deux moteurs/altarnateurs électriques 3a, 3b définit un axe BB.

Dans la deuxième symétrie, les deux moteurs/alternateurs électriques 3a, 3b sont symétriques par rapport à un axe de symétrie BB.

Dans les deux symétries, lors du fonctionnement, les deux moteurs/alternateurs électriques 3a, 3b restent sensiblement symétriques entre eux par rapport au plan P ou à l'axe BB de symétrie.

### Première variante du deuxième mode de réalisation

Dans une première variante du deuxième mode de réalisation du mécanisme à vilebrequins 3 selon l'invention, une bielle 6a est liée à rotation, au niveau d'une de ses extrémités, au maneton 33a du premier moteur/alternateur électrique 3a et une bielle 6b est liée à rotation, au niveau d'une de ses extrémités, au maneton 33b du deuxième moteur/alternateur électrique 3b. Les bielles 6a, 6b agissent ensemble sur un piston 34 pouvant se déplacer le long d'une chemise (non représentée sur les figures) suivant l'axe BB.

Les deux bielles 6a, 6b sont orientées de manière sensiblement symétrique par rapport à l'axe BB du piston 34 et dans le même sens. Les bielles 6a, 6b sont liées à rotation, au niveau de l'autre de leur extrémité, au piston 34.

### Deuxième variante du deuxième mode de réalisation

Dans une deuxième variante du deuxième mode de réalisation du mécanisme à vilebrequins 3 selon l'invention, l'agencement bielles-manetons-moteurslaltemateurs électriques est identique à la première variante du deuxième mode de réalisation. En lieu et place d'un simple piston est prévu un ensemble de deux pistons reliés l'un à l'autre par une tige (25) s'étendant entre les deux pistons et suivant une direction correspondant au déplacement des pistons dans les chemises correspondantes (voir figure 7). Les bielles n'agissent directement que sur un seul des deux pistons.

### Troisième variante du deuxième mode de réalisation

Dans une troisième variante du deuxième mode de réalisation du mécanisme à vilebrequins 3 selon l'invention, deux bielles 4a et 4a' sont liées à rotation au premier maneton 33a et deux bielles 4b et 4b' sont liées à rotation au deuxième maneton 33b, au niveau d'une de leurs extrémités. Les bielles agissent par paire (4a, 4b) et (4a', 4b') sur un premier et deuxième pistons 34 et 34' pouvant se déplacer le long d'une première et d'une deuxième chemises respectives (non représentées sur les figures) suivant l'axe BB. Une paire de bielles est constituée d'une bielle 4a ou 4a' liée au premier maneton 33a et d'une bielle 4b ou 4b' liée au deuxième maneton 33b. Les bielles d'une paire de bielles sont donc orientées sensiblement suivant l'axe BB des pistons 34, 34' et dans le même sens, et sont disposées de manière axialement symétrique par rapport à l'axe BB des pistons 34, 34'. Les bielles 4a, 4b, 4a', 4b' sont liées à rotation aux pistons 24, 24' au niveau de l'autre de leurs extrémités.

Les pistons 34, 34' sont orientés dans des sens opposés de l'axe BB, ce qui signifie également que les paires de bielles sont orientées dans des sens opposés de l'axe BB.

### Quatrième variante du deuxième mode de réalisation

Dans une quatrième variante du deuxième mode de réalisation du mécanisme à vilebrequins 3 selon l'invention, une mono bielle 8, semblable à celle décrite dans la quatrième variante du premier mode de réalisation, est utilisée.

Chacun des montants 83, 83' est lié à un piston 34, 34' respectivement, ces piston se déplacement le long de chemises (non représentées) suivant l'axe EE.

L'extension des manetons 33a, 33b à l'intérieur de l'ouverture allongée 82 du guide à manetons 81 est adaptée afin que les manetons ne s'entrechoquent pas. Par exemple, dans le cas de la première symétrie (symétrie planaire), les manetons 33a, 33b peuvent s'étendre sur l'épaisseur totale du guide à manetons 81 à travers l'ouverture allongée 82. En effet, dans ce cas précis, il n'y a pas de risque pour que les manetons s'entrechoquent. Dans le cas de la deuxième symétrie (symétrie axiale), il se peut que les moteurs/alternateurs électriques soient disposés de manière à se chevaucher partiellement. La somme des longueurs des extensions des manetons 33a, 33b à l'intérieur de l'ouverture allongée 82 ne doit alors pas dépasser l'épaisseur du guide à maneton 81, par exemple, chacun des manetons 33a, 33b ne s'étendant que sur au plus la demi-épaisseur du guide à manetons 81.

### Fonctionnement

Le fonctionnement du mécanisme à vilebrequins est ci-après décrit. Ce fonctionnement est analogue pour toutes les variantes des deux modes de réalisations du mécanisme à vilebrequins 2, 3.

Le ou les piston(s) 24, 24', 34, 34' lors de son/leur mouvement suivant l'axe BB, fait/font tourner les rotors 21a, 21b, 31a, 31b par l'intermédiaire des manetons 23a, 23b, 33a, 33b et de la ou des paire(s) de bielles 4a, 4a', 4b et 4b', 6a, 6b ou de la mono bielle 8.

Les deux rotors 21 a, 21 b sont synchronisés et tournent sur leurs axes de rotation AA dans des sens contraires.

Une synchronisation des rotors 21 a, 21 b est obtenue électroniquement, par exemple à l'aide d'une carte électronique comportant un microprogramme. Cette synchronisation électronique permet d'économiser l'énergie qui aurait été perdue si la synchronisation avait été mécanique du fait des frottements que ce type de synchronisation implique. Cette synchronisation électronique permet également de s'affranchir de la complexité intrinsèque d'une synchronisation mécanique due au nombre de pièces nécessaires ; le mécanisme à vilebrequins 2 selon l'invention est plus simple et donc plus fiable.

Du fait de la symétrie axiale ou planaire de la disposition des bielles d'une paire de bielles, dans le cas des premières, deuxièmes et troisièmes variantes, lors du mouvement d'un piston 24, 34 (respectivement 24', 34'), les composantes perpendiculaires à l'axe BB de la force exercée par une bielle 4a, 4b, 6a, 6b (respectivement 4a', 4b') sont compensées par les composantes perpendiculaires à l'axe BB de la force exercée par l'autre bielle 4b, 4a, 6b, 6a (respectivement 4b', 4a'). Ainsi, aucune force n'est exercée par le piston 24, 34 (respectivement 24', 34') sur la chemise, il n'y a donc plus de perte d'énergie due aux frottements du piston sur la chemise résultant d'efforts transversaux.

Ceci est également vrai pour les quatrièmes variantes utilisant la mono bielle 8. En effet, chaque montant 83, 83' exerce une force colinéaire à l'axe BB de déplacement du piston 24, 24', 34, 34' correspondant. Il n'y a donc plus de perte d'énergie due aux frottements du piston sur la chemise résultant d'efforts transversaux.

La symétrie axiale ou planaire de la disposition des bielles d'une paire de bielles permet également aux pistons 24, 24', 34, 34' de ne pas subir de basculement quand ils arrivent à un point mort haut ou à un point mort bas de leur course. En effet, comme il a été précisé ci-dessus, la résultante des forces exercées par une paire de bielles sur un piston 24, 24', 34, 34' possède une seule composante colinéaire à l'axe BB des pistons 24, 24', 34, 34'; ce qui évite les basculements précités. Ce mécanisme à vilebrequins 2, 3 est alors plus silencieux.

Il n'y a pas de problème de basculement du ou des pistons 24, 24', 34, 34' dans le cas de l'utilisation d'une mono bielle 8. Les avantages précités ci-dessus valent donc également pour les quatrièmes variantes.

Ceci facilite également la synchronisation. En effet, la synchronisation de deux moteurs/alternateurs électriques sans entraînement mécanique classique n'est réalisable que si les points mort haut et les points mort bas sont passés avec une certaine précaution. Les autres positions intermédiaires d'un cycle étant contraint par la géométrie de l'assemblage des bielles, les points mort haut et bas sont les points les plus sensibles à la désynchronisation.

Lorsqu'il y a deux pistons, les deux pistons 24, 24', 34, 34' bougent toujours dans le même sens, c'est-à-dire que lorsqu'un piston 24, 24', 34, 34' se dirige vers son point mort haut, l'autre piston 24', 24, 34', 34 se dirige vers son point mort bas ; les pistons 24, 24', 34, 34' se déplacent en opposition de phase.

En mode motricité, c'est-à-dire selon un fonctionnement équivalent à celui d'un compresseur, les phases des moteurs sont pilotées à l'identique, c'est-à-dire en couplant les phases. Ceci contraint naturellement les moteurs à tourner à la même vitesse et le défaut angulaire reste très faible, inférieur au dixième de degrés. Les risques de désynchronisation concernent uniquement le moteur/alternateur électrique 2a, 2b, 3a, 3b qui rencontre le couple résistif le plus important et qui prend donc du retard. Aussi, c'est le moteur qui a un léger retard qui impose une consigne de position pour piloter les moteurs. La synchronisation en mode motricité est réalisée à moindre énergie puisque seuls des signaux de commande pour réaliser la fonction sont gérés.

Toute la plage des vitesses de rotation est alors possible sans risque de désynchronisation, notamment à vitesse lente. Quand le moteur atteint une certaine vitesse, l'inertie des masses tournantes contribue à stabiliser le cycle. Ceci permet de passer en mode régénération avec ou sans couplage des phases.

En mode régénération (voir figure 6), c'est-à-dire selon un fonctionnement équivalent à celui d'un groupe électrogène, un courant 41 sortant des moteurs/alternateurs électriques 2a, 2b subit un redressement actif 42. Ce redressement actif 42 associe des fonctions de recherche de fonctionnement au point maximum de puissance et de synchronisation des alternateurs. Ce mode de synchronisation permet au moteur/alternateur électrique 2a, 2b qui prend un retard angulaire de le rattraper en diminuant une consigne de hachage du redresseur actif et donc de diminuer l'amplitude de la régénération qui concerne ce moteur. La synchronisation en mode régénération est réalisée à moindre énergie puisque seuls des signaux de commande pour réaliser la fonction sont gérés.

Le circuit électrique après ce redressement actif 42 crée un bus de courant continu. Il est alors possible de recharger directement des batteries ou de placer un onduleur 43 pour générer du courant sur un réseau 44.

Dans tous ces modes de fonctionnement, les pertes d'énergie pour la synchronisation sont inférieures à environ 0,1% de l'énergie introduite. Ceci montre l'intérêt d'une telle solution vis-à-vis des systèmes mono-bielle-manivelle dont les pertes d'énergie par frottement sont de l'ordre de 5% de l'énergie introduite. Un avantage de l'invention par rapport aux systèmes multi-vilebrequin avec synchronisation mécaniques, lorsqu'ils sont utilisés pour produire de l'énergie électrique à partir d'énergie thermodynamique, est l'amélioration du rendement global d'environ 5% par rapport à ces derniers de par la forte diminution de l'énergie de synchronisation (comprise entre environ 3% et environ 4%) ainsi que par la diminution des frottements du vilebrequin (comprise entre environ 1 % et environ 2%).

Un avantage du premier mode de réalisation du mécanisme à vilebrequins 2 est la diminution de l'encombrement du mécanisme 2 dû au fait que les vilebrequins sont disposés sur un même axe et de manière à se faire face.

Un autre avantage est qu'une lubrification de tourillons des vilebrequins n'est pas nécessaire, puisque ces tourillons sont réalisés par un axe relié aux stators 22a, 22b, 32a, 32b ; les tourillons sont alors fixes. Ceci facilite également l'étanchéité du mécanisme. Ceci vaut également pour le deuxième mode de réalisation.

Un autre avantage du premier et deuxième mode de réalisation est la diminution du nombre de pièces nécessaires par rapport aux solutions actuelles disponibles. En effet, dans les solutions actuelles, le vilebrequin entraîne un alternateur. Or dans le mécanisme à vilebrequins 2, 3 selon l'invention, les fonctions de vilebrequin et d'alternateur sont réunies dans une seule pièce : le moteur/alternateur électrique. Ceci réduit encore d'avantage l'encombrement.

Un autre avantage est la diminution des frottements qui résulte d'une diminution du nombre de liaisons entre les différentes pièces du mécanisme à vilebrequins 2 selon l'invention. Afin d'optimiser au mieux les frottements, les bielles 4a, 4a', 4b, 4b', 6a, 6b, 8 sont montées sur roulements.

Un autre avantage est que la dynamique des masses en mouvement, le calage des moteurs/alternateurs électriques et la symétrie de l'énergie récupérée par les deux moteurs/alternateurs électriques permet d'assurer une stabilité de la synchronisation réduisant l'énergie d'entraînement en dessous des valeurs jamais atteintes avec un système bielle-manivelle classique.

Enfin, la diminution du nombre de pièces conduit également à une diminution du coût de fabrication du mécanisme à vilebrequins 2, 3 selon l'invention.

Bien entendu, il est possible d'apporter de nombreuses modifications au mécanisme à vilebrequins selon l'invention sans sortir du cadre de celle-ci.

## Revendications

1. Mécanisme à vilebrequins (2) d'un moteur, comprenant un premier et un deuxième vilebrequins (2a, 2b ; 3a, 3b) à axés parallèles, **caractérisé en ce que** les premier et deuxième vilebrequins (2a, 2b ; 3a, 3b) sont formés par un premier et un deuxième moteurs/alternateurs électriques comprenant chacun un rotor (21a, 21b ; 31a, 31b) et un stator (22a, 22b ; 32a, 32b).

2. Mécanisme à vilebrequins (2) selon la revendication 1, **caractérisé en ce qu'**il comprend des moyens de synchronisation électroniques et mécaniques entre les premier et deuxième moteurs/alternateurs électriques.

3. Mécanisme à vilebrequins (2) selon l'une des revendications 1 ou 2, **caractérisé en ce que** les premier et deuxième moteurs/alternateurs électriques (2a, 2b) sont alignés sur un même axe (AA), leurs rotors (21a, 21 b) se faisant face.

4. Mécanisme à vilebrequins (2) selon l'une des revendications 1 ou 2, **caractérisé en ce que** les premier et deuxième moteurs/alternateurs électriques (3a, 3b) sont positionnés selon deux axes parallèles distincts (37a, 37B) et symétriquement par rapport à un plan de symétrie (P) colinéaire aux axes parallèles et distincts (37a, 37b).

5. Mécanisme à vilebrequins (2) selon l'une des revendications 1 à 4, **caractérisé en ce que** chacun des rotors (21a, 21b ; 31a, 31b) comprend un maneton (23a, 23b ; 33a, 33b) lié à une ou deux bielle(s) (4a, 4b, 4a', 4b' ; 6a, 6b ; 8).

6. Mécanisme à vilebrequins (2) selon la revendication 5, **caractérisé en ce que** chaque maneton (23a, 23b ; 33a, 33b) est lié à une seule bielle (6a, 6b), et **en ce que** les deux bielles (6a, 6b), formant une paire de bielles, agissent sur.un piston (24).

7. Mécanisme à vilebrequins (2) selon la revendication 6, **caractérisé en ce que** le piston (24) est relié à un autre piston (24') par une tige (25) s'étendant entre eux.

8. Mécanisme à vilebrequins (2) selon la revendication 5, **caractérisé en ce que** chaque maneton (23a, 23b ; 33a, 33b) est lié à deux bielles (4a, 4b ; 4a', 4b'), et **en ce que** les bielles agissent par paire sur un piston (24, 24'), une paire étant constituée d'une bielle (4a ou 4a') liée au maneton (23a, 33a) du premier moteur/alternateur électrique (2a) et d'une bielle (4b ou 4b') liée au maneton (23b, 33b) du deuxième moteur/alternateur électrique (2b).

9. Mécanisme à vilebrequins (2) selon l'une des revendications 6 à 8 en combinaison avec la revendication 3, **caractérisé en ce que** les paires de bielles sont disposées de manière axialement symétrique par rapport à une direction (BB) sensiblement perpendiculaire à l'axe (AA) des moteurs/alternateurs électriques (2a, 2b).

10. Mécanisme à vilebrequins (2) selon l'une des revendications 6 à 8 en combinaison avec la revendication 4, **caractérisé en ce que** les paires de bielles sont disposées de manière symétrique par rapport au plan de symétrie (P).

11. Mécanisme à vilebrequins (2) selon la revendication 5, **caractérisé en ce que** les manetons (23a, 23b ; 33a, 33b) sont liés à une et même mono bielle (8) agissant sur deux pistons (24, 24').

12. Mécanisme à vilebrequins (2), selon la revendication 11, **caractérisé en ce que** la mono bielle (8) comprend un guide (81) à manetons avec une ouverture (82) allongée destiné à recevoir et à guider les manetons (23a, 23b ; 33a, 33b) et de deux montants (83, 83') chacun relié à un piston (24, 24'), les montants étant liés par soudure ou venant de moulage avec le guide (81) à manetons, et **en ce que** les montants s'étendent suivant un axe de symétrie (EE) du guide (81) à maneton, l'axe de symétrie (EE) étant lui-même perpendiculaire à une direction d'allongement (DD) de l'ouverture.

13. Mécanisme à vilebrequins (2) selon la revendication 12 en combinaison avec la revendication 3, **caractérisé en ce que** chacun des manetons (23a, 23b ; 33a, 33b) s'étend sur au plus la demi-épaisseur du guide (81) à maneton à l'intérieur de l'ouverture (82) allongée.

14. Mécanisme à vilebrequins (2) selon l'une des revendications 7 à 10 en combinaison avec l'une des revendications 7 ou 8, **caractérisé en ce que** les pistons (24, 24') sont agencés de sorte à se déplacer en opposition de phase.

15. Mécanisme à vilebrequins (2) selon l'une des revendications 1 à 14, **caractérisé en ce que** les moteurs/alternateurs électriques (2a, 2b ; 3a, 3b) tournent autour de leur axe dans des sens opposés.

16. Mécanisme à vilebrequins (2) selon l'une quelconque des revendications 1 à 15, **caractérisé en ce que** les moteurs (2a, 2b) sont choisis parmi : des moteurs thermiques, des compresseurs, des moteurs à air chaud.
